Europäisches Patentamt

European Patent Office

Office européen des brevets

(11) Veröffentlichungsnummer: **0 204 929**
B1

(12) **EUROPÄISCHE PATENTSCHRIFT**

(45) Veröffentlichungstag der Patentschrift:
26.10.88

(21) Anmeldenummer: **86105432.8**

(22) Anmeldetag: **19.04.86**

(51) Int. Cl.⁴: **F 16 D  23/14**

(54) Kupplungsausrücklager und Verfahren zu seiner Herstellung.

(30) Priorität: **11.06.85  DE 3520815**

(43) Veröffentlichungstag der Anmeldung:
**17.12.86 Patentblatt 86/51**

(45) Bekanntmachung des Hinweises auf die Patenterteilung:
**26.10.88 Patentblatt 88/43**

(84) Benannte Vertragsstaaten:
**DE FR IT**

(56) Entgegenhaltungen:
**DE - A - 2 423 320**
**FR - A - 2 320 460**
**FR - A - 2 508 997**
**FR - A - 2 540 950**
**GB - A - 2 076 497**
**US - A - 4 225 028**

(73) Patentinhaber: **INA Wälzlager Schaeffler KG,**
**Industriestrasse 1-3 Postfach 1220,**
**D-8522 Herzogenaurach (DE)**

(72) Erfinder: **Rabe, Jürgen, Dipl.-Ing., Talblick 6,**
**D-8521 Aurachtal (DE)**

(74) Vertreter: **Klug, Horst, Dipl.-Ing. (FH), c/o INA Wälzlager**
**Schaeffler KG Postfach 12 20, D-8522 Herzogenaurach**
**(DE)**

ACTORUM AG

## Beschreibung

Die Erfindung betrifft ein Kupplungsausrücklager, welches ein aus einem spritz- oder giessbaren durch insbesondere faserförmige Füllstoffe armierten polymeren Werkstoff gebildetes, ein Wälzlager tragendes Gehäuse aufweist, das aus einer auf einer Führung längsverschieblichen Hülse besteht, an die ein im wesentlichen radial nach aussen gerichteter Flansch einstückig angebildet ist, der einen Anschlag für das Wälzlager bildet und eine Angriffsfläche für ein Betätigungselement besitzt, und ein Verfahren zur Herstellung eines solchen Kupplungsausrücklagers.

Derartige Kupplungsausrücklager werden zur Betätigung von Kupplungen insbesondere in Kraftfahrzeugen verwendet, wobei die Führung meist durch ein die Getriebeeingangswelle umgebendes Führungsrohr gebildet ist und eine Ausrückgabel vorgesehen ist, die das Gehäuse samt dem Wälzlager beim Ausrücken auf dem Führungsrohr in Richtung auf die Kupplung verschiebt und mit deren Ausrückmechanismus in Eingriff bringt. Die Verwendung eines durch Füllstoffe armierten polymeren Werkstoffs für das Gehäuse erfolgt aus Festigkeitsgründen.

Durch die ED-A-3 025 705 ist ein an sich funktionsfähiges Kupplungsausrücklager der eingangs genannten Art bekannt, bei dessen Gehäuse der Flansch an dem einen Ende der Hülse vorgesehen ist. Bei dem bekannten Kupplungsausrücklager tritt aber das Problem auf, dass infolge der beim Erkalten des polymeren Werkstoffs auftretenden Schrumpfungserscheinungen die fertige Hülse an demjenigen ihrer Enden, an dem der eine beachtliche Materialanhäufung darstellende Flansch angebracht ist, einen kleineren Durchmesser als an ihrem freien Ende aufweist. Hierdurch besteht die Gefahr, dass die Hülse beim Ausrücken auf dem Führungsrohr verkantet und klemmt. Diese Neigung zum Klemmen kann dann verstärkt auftreten, wenn der Flansch nicht rotationssymmetrisch ausgebildet ist, was dazu führt, dass sich die Bohrung beim Erkalten des polymeren Werkstoffs im Bereich des Flansches zusätzlich unrund ausbildet.

Es kommt hinzu, das die der Verstärkung des Gehäuses dienenden Füllstoffe auch im Bereich der Berührfläche der Hülse mit dem Führungsrohr vorliegen und insbesondere dann, wenn sie faserförmig sind, abrasiven Verschleiss an der Oberfläche des Führungsrohres verursachen. Abgesehen davon, dass dieser Verschleiss an sich schädlich ist, verstärkt er die ohnehin vorhandene Neigung der Hülse, auf dem Führungsrohr zu klemmen.

Zwar ist es möglich, das Klemmen der Schiebehülse, soweit es durch Ungenauigkeiten ihrer Bohrung bedingt ist, durch kostspieliges Nacharbeiten der Bohrung oder durch aufwendige Arbeiten am Spritzwerkzeug zumindest teilweise zu beseitigen, jedoch sind diese Massnahmen nicht geeignet, den durch die Füllstoffe verursachten Verschleiss und die durch diesen bedingte Neigung zum Klemmen zu beseitigen.

Es ist die Aufgabe der Erfindung ein gattungsgemässes Kupplungsausrücklager zu schaffen, bei dem sich die beim Erkalten des polymeren Werkstoffs auftretenden Schrumpfungserscheinungen nicht nachteilig auf die Präzision der Bohrung der Hülse auswirken und bei dem zugleich der durch abrasive Füllstoffe verursachte Verschleiss zwischen der Hülse und der Führung beseitigt ist, und ein Verfahren zur Herstellung eines solchen Kupplungsausrücklagers anzugeben.

Erfindungsgemäss wird diese Aufgabe dadurch gelöst, dass

a) die Bohrung der Hülse an jedem ihrer Enden einen mit der Führung zusammenwirkenden Gleitring und zwischen den Gleitringen einen Bereich mit einem vergrösserten Durchmesser aufweist,

b) der Flansch in dem Bereich der Hülse angeordnet ist, in dem deren Bohrung den vergrösserten Durchmesser aufweist und

c) Das Gehäuse und die Gleitringe aus unterschiedlichen polymeren Werkstoffen bestehen, wobei sich der Werkstoff der Gleitringe von dem des Gehäuses wenigstens dadurch unterscheidet, dass er frei von abrasiv wirkenden Füllstoffen ist.

Durch die erfindungsgemässe Ausbildung des Kupplungsausrücklagers wird erreicht, dass sich die durch den Flansch bedingten Schrumpfungsvorgänge im wesentlichen in einem Bereich der Bohrung der Hülse auswirken, der wegen seines vergrösserten Durchmessers nicht mit der Hülse in Berührung steht. Die Präzision der Bohrungen der mit der Führung zusammenwirkenden Gleitringe wird somit durch die durch den Flansch bedingten Schrumpfungsvorgänge nicht beeinträchtigt, so dass ein durch letztere bedingtes Klemmen der Hülse auf der Führung nicht zu befürchten ist. Ebenso ist durch die Armierung des Gehäuses verursachter Verschleiss der Führung und hierdurch bedingte Klemmgefahr ausgeschlossen, da die Gleitringe keine abrasiv wirkenden der Armierung dienenden Füllstoff enthalten.

Um die Gleiteigenschaften zwischen der Hülse und dem Führungsrohr weiter zu verbessern, kann der Werkstoff der Gleitringe gemäss einer Ausführungsform der Erfindung ein Trockenschmiermittel enthalten.

Um Klappergeräusche zu vermeiden und um die Dämpfung zwischen der Hülse und dem Führungsrohr zu verbessern, sieht eine Ausführung der Erfindung vor, dass der Werkstoff der Gleitringe eine geringere Shore-Härte aufweist als der Werkstoff des Gehäuses.

Nach einer Variante der Erfindung ist vorgesehen, dass die Hülse mit mehreren über ihren Umfang verteilten im wesentlichen axial verlaufenden Schlitzen versehen ist, welche von den freien Enden der Hülse ausgehen und in ihrer axialen Erstreckung im wesentlichen der der Gleitringe entsprechen. Diese Massnahme ist insbesondere dann von Vorteil, wenn sich in besonderen Fällen die Schrumpfungserscheinungen bis in jenen Bereich der Hülse erstrecken, in dem sich die Gleitringe befinden, und die Gleitringe nach einer Ausführung der Erfindung getrennt von der Hülse hergestellt und in deren Bohrung befestigt sind. In diesen Fällen wird durch die infolge der Schlitze erhöhte Nachgiebigkeit der Hülse im Bereich der Gleitringe vermieden, dass sich Formabweichungen der Hülse auf die in deren Bohrung eingesetzten Gleitringe übertragen und sich so nachteilig auf die Präzision der Bohrung der Gleitringe auswirken.

In der Regel wird man aber der fertigungstechnischen Vorteile wegen nach einer Ausführung der Erfindung die Gleitringe einstückig an die Hülse anbilden.

Nach einer Variante der Erfindung besteht ein Verfahren zur Herstellung eines erfindungsgemässen Kupplungsausrücklagers darin, dass der Werkstoff für das Gehäuse und der Werkstoff für die Gleitringe in eine gemeinsame Spritzform durch getrennte Kanäle im wesentlichen gleichzeitig eingebracht werden und die Verbindung der beiden Werkstoffe an den Trennflächen zwischen dem Gehäuse und den Gleitringen im warmplastischen Zustand erfolgt. Es ist somit ein Gehäuse mit einstückig an die Hülse angebildeten Gleitringen in einem einzigen Arbeitsgang herzustellen.

Insbesondere in Fällen, in denen sich die durch die Schrumpfungsvorgänge der Hülse bedingter Formabweichungen bis in jenen Bereich erstrecken, in dem sich die Gleitringe befinden, sieht nach einer Ausgestaltung der Erfindung ein Verfahren zur Herstellung eines erfindungsgemässen Kupplungsausrücklagers vor, dass in eine Spritzform mit vergrösserbarem Formhohlraum zunächst der Werkstoff für das Gehäuse durch einen ersten Kanal eingebracht wird, dann der Formhohlraum um einen den Gleitringen entsprechenden Raum vergrössert wird und der Werkstoff für die Gleitringe durch einen zweiten Kanal in die Spritzform eingebracht wird, wobei die Verbindung der beiden Werkstoffe an den Trennflächen zwischen dem Gehäuse und den Gleitringen im warmplastischen Zustand erfolgt. Es wird so erreicht, dass der Werkstoff des Gehäuses vor dem Einbringen des Werkstoffs für die Gleitringe bereits so weit erstarrt ist, dass im Anschluss an die durch die Vergrösserung des Formhohlraums bedingte teilweise Entformung des Gehäuses die Schrumpfungsvorgänge bereits stattfinden, bevor der Werkstoff für die Gleitringe in die Spritzform eingebracht wird. Es können somit im Bereich der Bohrungen der Gleitringe keine durch Schrumpfungsvorgänge bedingten Formfehler auftreten. Allerdings muss der Werkstoff für die Gleitringe zu einem Zeitpunkt in die Spritzform eingebracht werden, in dem sich der des Gehäuses noch im warmplastischen Zustand befindet, da andernfalls die gewünschte Verbindung zwischen den beiden Werkstoffen nicht zustande kommt.

Nach einer letzten Variante der Erfindung sieht ein Verfahren zur Herstellung eines erfindungsgemässen Kupplungsausrücklagers vor, dass zunächst das Gehäuse ohne die Gleitringe hergestellt wird, dass dieses in eine Form, die im Bereich der Gleitringe entsprechende Freiräume aufweist, eingelegt wird und dass schliesslich der Werkstoff für die Gleitringe in die Freiräume eingebracht wird, wobei nach einer Ausführung der Erfindung die Trennflächen zwischen dem Gehäuse und den Gleitringen vor dem Einlegen des Gehäuses in die Form mit einem Haftvermittler versehen werden können, wenn die zur Anwendung kommende Werkstoffpaarung dies erfordert. Auch in diesem Fall ist sichergestellt, dass eventuelle Schrumpfungsvorgänge der Hülse im Bereich der Gleitringe abgeschlossen sind, bevor diese gebildet werden, so dass die Präzision der Bohrungen der Gleitringe durch Schrumpfungserscheinungen des Gehäuses nicht nachteilig beeinfluss werden kann.

In den beigefügten Figuren sind Ausführungsbeispiele der Erfindung dargestellt. Es zeigen:

Fig. 1 einen Längsschnitt durch ein erfindungsgemässes Kupplungsausrücklager,

Fig. 2 bis 4 Längsschnitte durch Spritzformen zur Herstellung von erfindungsgemässen Kupplungsausrücklagern und

Fig. 5 einen Längsschnitt durch das Gehäuse eines erfindungsgemässen Kupplungsausrücklagers.

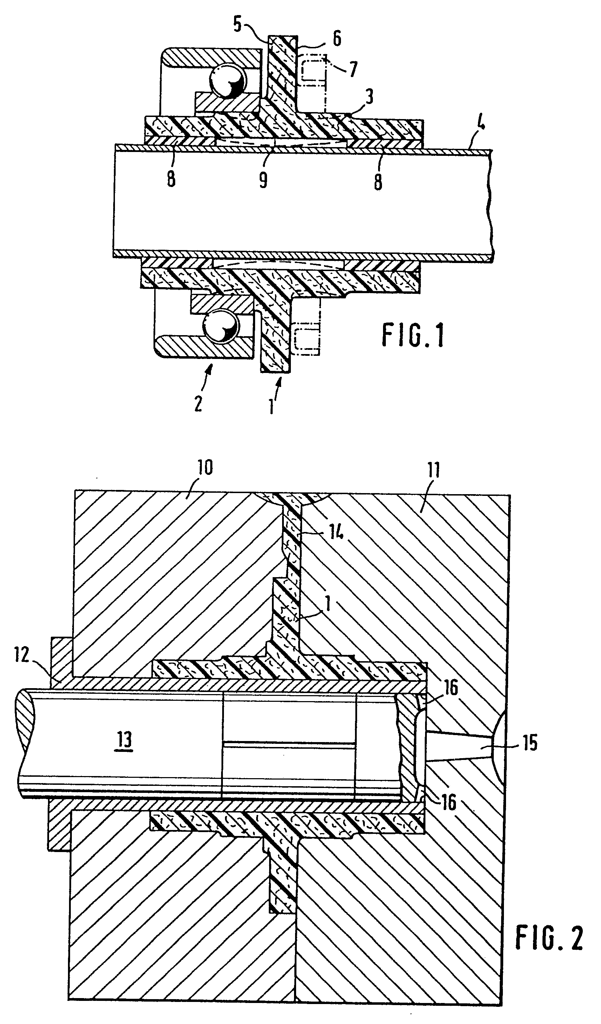

Das in Figur 1 gezeigte erfindungsgemässe Kupplungsausrücklager besteht aus einem Gehäuse 1, welches ein Rillenkugellager 2 trägt, wobei das Gehäuse 1, wie aus der Schraffur ersichtlich, aus einem durch faserförmige Füllstoff armierten polymeren Werkstoff besteht.

Das Gehäuse 1 weist eine Hülse 3, mittels derer es auf einem Führungsrohr 4 längsverschieblich gelagert ist, und einen radial nach aussen gerichteten Flansch 5 auf, an welchem das Rillenkugellager 2 mit seinem feststehenden inneren Laufring anliegt. Auf der von dem Rillenkugellager 2 abgewandten Seite des Flansches 5 ist eine Angriffsfläche 6 für eine strichpunktiert angedeutete Ausrückgabel 7 vorgesehen, durch welche das Kupplungsausrücklager auf dem Führungsrohr 4 in Richtung auf eine nicht gezeigte Kupplung verschoben und der äussere Laufring des Rillenkugellagers 2 mit dem Ausrückmechanismus der Kupplung in Eingriff gebracht werden kann.

Die Bohrung der Hülse 3 ist an jedem ihrer Enden mit einem mit dem Führungsrohr 4 zusammenwirkenden Gleitring 8 versehen und weist zwischen diesen einen Bereich 9 mit einem vergrösserten Durchmesser auf, wobei der Flansch 5 in demjenigen Bereich 9 der Hülse 3 angeordnet ist, in dem deren Bohrung den vergrösserten Durchmesser auweist.

Wie aus der Schraffur ersichtlich ist, bestehen die Gleitringe 8, obwohl sie mit der Hülse 3 einstückig ausgebildet sind, aus einem polymeren Werkstoff, der im Gegensatz zu dem des Gehäuses 1 frei von abrasiv wirkenden Füllstoffen ist. Ausserdem weist der Werkstoff der Gleitringe 8 eine geringe Shore-Härte als der des Gehäuses 1 auf.

Da der Flansch 5 eine erhebliche Materialanhäufung darstellt, stellen sich beim Erkalten des Gehäuses 1 Schrumpfungserscheinungen ein, durch welche sich die Hülse 3 etwa in der in Fig. 1 strichliert dargestellten Weise verformt. Da in demjenigen Bereich, in dem die Schrumpfungserscheinungen hauptsächlich auftreten, die Bohrung der Hülse 3 einen vergrösserten Durchmesser aufweist, können sich diese Schrumpfungserscheinungen aber nicht nachteilig auf die Präzision der Bohrungen der mit dem Führungsrohr 4 zusammenwirkenden Gleitringe 8 auswirken. Auch etwaige durch Schrumpfungserscheinungen des Flansches 5 bedingte Unrundheiten der Bohrung der Hülse 3 bilden sich im wesentlichen in dem Bereich 9 mit dem vergrösserten Durchmesser aus und wirken sich somit nicht nachteilig auf die Gleitringe 8 aus. Da ausserdem der Werkstoff der Gleitringe 8 keine der Armierung dienenden Füllstoffe enthält, kann durch diese bedingter Verschleiss am Führungsrohr 4 nicht auftreten. Schliesslich ist dadurch, dass die Gleitringe 8 aus einem Werkstoff bestehen, der eine geringere Shore-Härte als der des Gehäuses 1 aufweist, gewährleistet, dass Klappergeräusche zwischen der Hülse 3 und dem Führungsrohr 4 nicht auftreten.

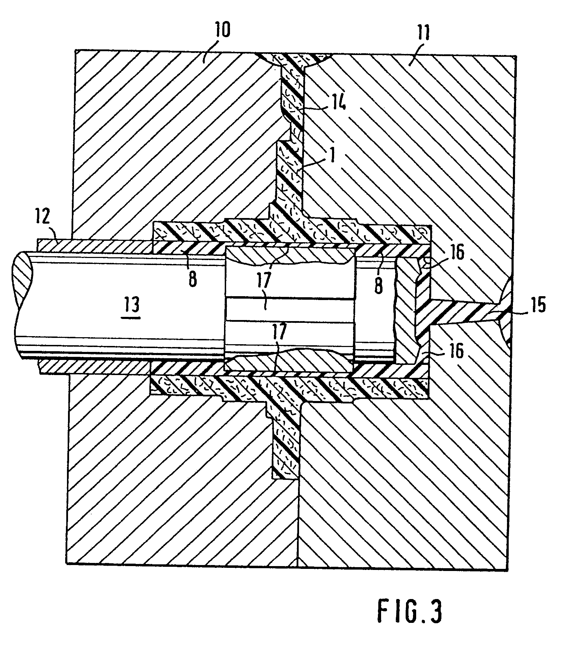

In den Figuren 2 und 3 ist ein Verfahren zur Herstellung eines erfindungsgemässen Kupplungsausrücklagers verdeutlicht.

Es ist jeweils eine Spritzform dargestellt, die aus den Formhälften 10 und 11, einer Trennhülse 12 und einem schematisch angedeuteten Zerfallkern 13 besteht.

Der zwischen den Formhälften 10 und 11 eingeschlossene Formhohlraum ist so beschaffen, dass er, wenn die den in Ruheposition befindlichen Zerfallkern 13 umgebende Trennhülse 12 wie in Figur 2 gezeigt in den Formhohlraum eingeschoben ist, der Gestalt des Gehäuses 1 ohne Gleitringe 8 entspricht. In diesen Formhohlraum wird durch einen Angusskanal 14 faserförmige Füllstoffe enthaltender polymerer Werkstoff eingefüllt.

Solange sich dieser Werkstoff noch in einem warmplastischen Zustand befindet, wird die Trennhülse 12 in die in Figur 3 gezeigte Position zurückgezogen und der in der Trennhülse 12 befindliche Zerfallkern 13 in die in Figur 3 gezeigte Spreizposition gebracht, wodurch jeweils der Gestalt der Gleitringe 8 entsprechende Hohlräume an beiden Enden der Bohrung des Gehäuses 1 gebildet werden, die durch einen zweiten Angusskanal 15 mit einem polymeren Werkstoff ausgefüllt werden, der frei von Füllstoffen ist. Dieser Werkstoff gelangt von dem Angusskanal 15 über in der Stirnfläche des Zerfallkerns 13 vorgesehene Radialverteiler 16 zunächst in den dem Angusskanal 15 benachbarten Ringraum und, nachdem dieser ausgefüllt ist, durch auf der Mantelfläche des Zerfallkerns 13 vorgesehene Überströmkanäle 17 in den von dem Angusskanal 15 entfernten Ringraum.

Da sich zu diesem Zeitpunkt der zuerst in die Form eingefüllte, faserförmige Füllstoffe enthaltende polymere Werkstoff noch in einem warmplastischen Zustand befindet, verbinden sich die beiden polymeren Werkstoffe miteinander, so dass das Gehäuse 1 einstückig angebildete Gleitringe 8 aufweist.

Zum Auswerfen des fertigen mit Gleitringen 8 versehenen Gehäuses 1 wird der Zerfallkern 13 wieder in seine Ruheposition gebracht und das Gehäuse 1 nach dem Öffnen der Form mittels der Trennhülse 12 ausgeworfen.

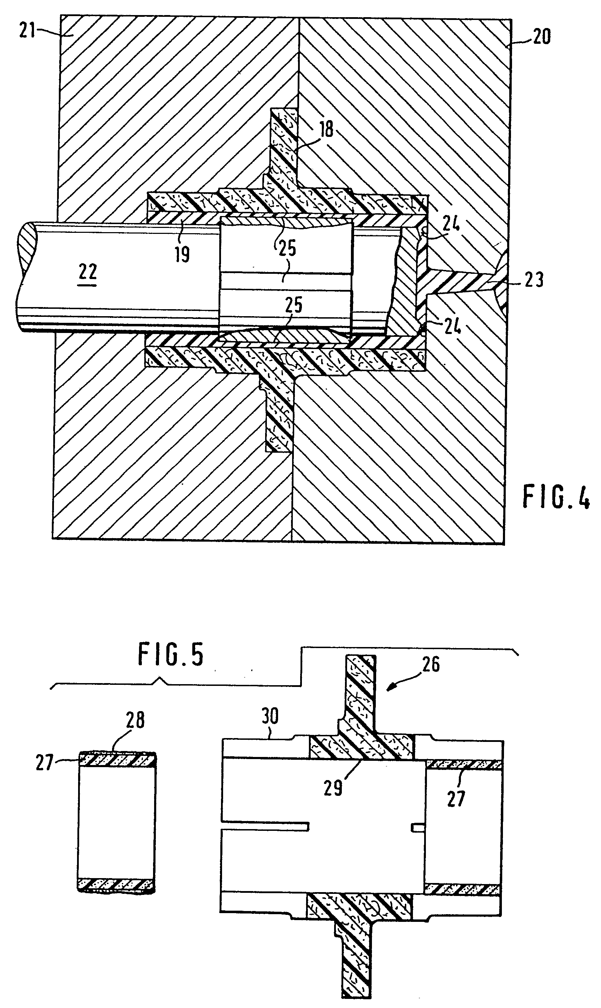

In Figur 4 ist ein zweites Verfahren zur Herstellung eines erfindungsgemässen Kupplungsausrücklagers verdeutlicht. Nach diesem Verfahren wird zunächst das Gehäuse 18 ohne Gleitringe 19 hergestellt. Es wird dann, wie in Figur 4 gezeigt, in eine aus zwei Formhälften 20 und 21 bestehende Spritzform eingelegt, die ausserdem einen Zerfallkern 22 aufweist, der derart ausgebildet ist, dass der in seiner in Figur 4 dargestellten Spreizposition die für die Gleitringe 19 erforderlichen Freiräume bildet. Die Form weist nur einen Angusskanal 23 auf, durch die polymerer Werkstoff, der frei von Füllstoffen ist, in der zuvor beschriebenen Weise zur Bildung der Gleitringe 19 über Radialverteiler 24 und Überströmkanäle 25 in die Freiräume eingebracht wird.

Zum Entnehmen des fertigen Gehäuses 18 aus der Form wird diese geöffnet und der Zerfallkern 22 in Ruheposition gebracht.

Bei beiden zuvor beschriebenen Verfahren ist selbst für den Fall, dass sich die Schrumpfungserscheinungen des Gehäuses 1 bzw. 18 bis in den Bereich der Gleitringe 8 bzw. 19 erstrecken, sichergestellt, dass sich diese nicht nachteilig auf die Präzision der Bohrungen der Gleitringe 8 bzw. 19 auswirken. Im Falle des zuerst beschriebenen Verfahrens kann der Werkstoff für die Gleitringe 8 nach dem Zurückziehen der Trennhülse 12 zu einem Zeitpunkt in die Spritzform eingebracht werden, in dem die Schrumpfungsvorgänge im fraglichen Bereich bereits stattgefunden haben, wobei jedoch sichergestellt werden muss, dass sich der Werkstoff des Gehäuses 1 noch im warmplastischen Zustand befindet. Im Falle des zweiten Verfahrens sind aufgrund der getrennten Herstellung des Gehäuses 18 und der Gleitringe 19 die Schrumpfungsvorgänge des Gehäuses 18 im Bereich der Gleitringe 19 ohnehin abgeschlossen, bevor letztere gebildet werden.

In Figur 5 ist schliesslich ein Verfahren zur Herstellung eines erfindungsgemässen Kupplungsausrücklagers verdeutlicht, bei dem das aus einem durch faserförmige Füllstoffe verstärkten polymeren Werkstoff bestehende Gehäuse 26 getrennt von den Gleitringen 27 hergestellt wird, die aus einem polymeren Werkstoff bestehen, der frei von abrasiv wirkenden Füllstoffen ist, aber, wie die Schraffur zeigt, ein Trockenschmiermittel enthält.

Die Gleitringe 27 werden an ihrer äusseren Mantelfläche mit Klebstoff 28 versehen und dann, wie in der rechten Hälfte der Figur 5 gezeigt, in die Bohrung 29 der Hülse 30 eingesetzt, so dass die Bohrung 29 zwischen den Gleitringen 27 einen Bereich grösseren Durchmessers aufweist.

Da die Hülse 30 im Bereich der Gleitringe 27 mit sich axial erstreckenden Schlitzen 31 versehen ist, welche von den freien Enden der Hülse 30 ausgehen und in ihrer Länge im wesentlichen der der Gleitringe 27 entsprechen, weist die Hülse 30 im Bereich der Gleitringe 27 eine derart erhöhte Nachgiebigkeit auf, dass sich eventuelle Formabweichungen der Hülse 30 nicht auf die Gleitringe 27 übertragen können, wenn diese in die Bohrung 29 der Hülse 30 eingesetzt werden.

**Patentansprüche**

1. Kupplungsausrücklager, welches ein aus einem spritz- oder giessbaren durch insbesondere faserförmige Füllstoffe armierten polymeren Werkstoff gebildetes, ein Wälzlager (2) tragendes Gehäuse (1) aufweist, das aus einer auf einer Führung (4) längsverschieblichen Hülse (3) besteht, an die ein im wesentlichen radial nach aussen gerichteter Flansch (5) einstückig angeformt ist, der einen Anschlag für das Wälzlager bildet und eine Angriffsfläche (6) für ein Betätigungselement besitzt, dadurch gekennzeichnet, dass

a) die Bohrung der Hülse (3, 30) an jedem ihrer Enden einen mit der Führung (4) zusammenwirkenden Gleitring (8, 19, 27) und zwischen den Gleitringen (8, 19, 27) einen Bereich (9) mit einem vergrössertn Durchmesser aufweist.

b) der Flansch (5) in dem Bereich der Hülse (3, 30) angeordnet ist, in dem deren Bohrung den vergrösserten Durchmesser aufweist und

c) das Gehäuse (1, 18, 26) und die Gleitringe (8, 19, 27) aus unterschiedlichen polymeren Werkstoffen, wobei sich der Werkstoff der Gleitringe (8, 19, 27) von dem des Gehäuses (1, 18, 26) wenigstens dadurch unterscheidet, dass er frei von abrasiv wirkenden Füllstoffen ist.

2. Kupplungsausrücklager nach Anspruch 1, dadurch gekennzeichnet, dass der Werkstoff der Gleitringe (27) ein Trockenschmiermittel enthält.

3. Kupplungsausrücklager nach Anspruch 1 oder 2, dadurch gekennzeichnet, dass der Werkstoff der Gleitringe (8) eine geringere Shore-Härte aufweist, als der Werkstoff des Gehäuses (1).

4. Kupplungsausrücklager nach einem der Ansprüche 1 bis 3, dadurch gekennzeichnet, dass die Hülse (30) mit mehreren über ihren Umfang verteilten im wesentlichen axial verlaufenden Schlitzen (31) versehen ist, welche von den freien Enden der Hülse (30) ausgehen und in ihrer axialen Erstreckung im wesentlichen der der Gleitringe (27) entsprechen.

5. Kupplungsausrücklager nach einem der Ansprüche 1 bis 4, dadurch gekennzeichnet, dass die Gleitringe (27) getrennt von der Hülse (30) hergestellt und in deren Bohrung (29) befestigt sind.

6. Kupplungsausrücklager nach einem der Ansprüche 1 bis 4, dadurch gekennzeichnet, dass die Gleitringe (8, 19) einstückig an die Hülse (3) angebildet sind.

7. Verfahren zur Herstellung eines Kupplungsausrücklagers nach Anspruch 6, dadurch gekennzeichnet, dass der Werkstoff für das Gehäuse (1) und der Werkstoff für die Gleitringe (8) in eine gemeinsame Spritzform (10 und 11) durch getrennte Kanäle (14 und 15) im wesentlichen gleichzeitig eingebracht werden und die Verbindung der beiden Werkstoffe an den Trennflächen zwischen dem Gehäuse (1) und den Gleitringen (8) im warmplastischen Zustand erfolgt.

8. Verfahren zur Herstellung eines Kupplungsausrücklagers nach Anspruch 6, dadurch gekennzeichnet, dass in eine Spritzform (10 und 11) mit vergrösserbarem Formhohlraum zunächst der Werkstoff für das Gehäuse (1) durch einen ersten Kanal (14) eingebracht wird, dann der Formhohlraum um einen den Gleitringen (8) entsprechenden Raum vergrössert wird und der Werkstoff für die Gleitringe (8) durch einen zweiten Kanal (15) in die Spritzform (10 und 11) eingebracht wird, wobei die Verbindung der beiden Werkstoffe an den Trennflächen zwischen dem Gehäuse (1) und den Gleitringen (8) im warmplastischen Zustand erfolgt.

9. Verfahren zur Herstellung eines Kupplungsausrücklagers nach Anspruch 6, dadurch gekennzeichnet, dass zunächst das Gehäuse (18) ohne die Gleitringe (19) hergestellt wird, dass dieses in eine Form (20 und 21), die im Bereich der Gleitringe (19) entsprechende Freiräume aufweist, eingelegt wird und dass schliesslich der Werkstoff für die Gleitringe (19) in die Freiräume eingebracht wird.

10. Verfahren nach Anspruch 9, dadurch gekennzeichnet, dass die Trennflächen zwischen dem Gehäuse (18) und den Gleitringen (19) vor dem Einlegen des Gehäuses (18) in die Form (20 und 21) mit einem Haftvermittler versehen werden.

## Claims

1. A clutch release bearing comprising a housing (1) formed from an injection-mouldable or castable polymeric material reinforced particularly by fibrous fillers, the housing (1) carrying a rolling bearing (2) and consisting of a sleeve (3) which is longitudinally slidable on a guide (4) and on which a substantially radially outwardly directed flange (5) is integrally moulded, such flange forming an abutment for the rolling bearing and having a working surface (6) for an actuating element, characterised in that

a) the bore in the sleeve (3, 30) has a slide ring (8, 19, 27) at each of its ends, such slide rings cooperating with the guide (4), and between the slide rings (8, 19, 27) said bore has a zone (9) having an enlarged diameter,

b) the flange (5) is disposed in that zone of the sleeve (3, 30) in which its bore has the enlarged diameter, and

c) the housing (1, 18, 26) and the slide rings (8, 19, 27) consist of different polymeric materials, the material of the slide rings (8, 19, 27) differing from that of the housing (1, 18, 26) at least in that it is free from fillers having an abrasive action.

2. A clutch release bearing according to claim 1, characterised in that the material of the slide rings (27) contains a dry lubricant.

3. A clutch release bearing according to claim 1 or 2, characterised in that the material of the slide rings (8) has a lower Shore hardness than the material of the housing (1).

4. A clutch release bearing according to any one of claims 1 to 3, characterised in that the sleeve (30) is provided with a plurality of substantially axially extending slots (31) which are distributed over its periphery and which start from the free ends of the sleeve (30) and the axial length of which corresponds substantially to that of the slide rings (27).

5. A clutch release bearing according to any one of claims 1 to 4, characterised in that the slide rings (27) are made separately from the sleeve (30) and are fixed in the bore (29) thereof.

6. A clutch release bearing according to any one of claims 1 to 4, characterised in that the slide rings (8, 19) are formed integrally on the sleeve (3).

7. A method of manufacturing a clutch release bearing according to claim 6, characterised in that the material for the housing (1) and the material for the slide rings (8) are introduced substantially simultaneously into a common injection mould (10 and 11) through separate ducts (14 and 15) and the connection between the two materials at the parting surfaces between the housing (1) and the slide rings (8) is effected in the thermoplastic state.

8. A method of manufacturing a clutch release bearing according to claim 6, characterised in that the material for the housing (1) is first introduced through a first duct (14) into an injection mould (10 and 11) having an enlargeable mould cavity, the mould cavity is then enlarged by a space corresponding to the slide rings (8) and the material for the slide rings (8) is introduced into the injection mould (10 and 11) through a second duct (15), the connection between the two materials at the parting surfaces between the housing (1) and the slide rings (8) being effected in the thermoplastic state.

9. A method of manufacturing a clutch release bearing according to claim 6, characterised in that the housing (18) is first manufactured without the slide rings (19), it is introduced into a mould (20 and 21) having corresponding free spaces in the region of the slide rings (19), and finally the material for the slide rings (19) is introduced into the free spaces.

10. A method according to claim 9, characterised in that the parting surfaces between the housing (18) and the slide rings (19) are provided with a coupling agent before insertion of the housing (18) into the mould (20 and 21).

**Revendications**

1. Butée de débrayage qui présente un boîtier (1) formé d'une matière polimère que l'on peut injecter ou couler, armée en particulier par des charges sous forme fibreuse, portant un roulement (2) et qui se compose d'un manchon (3) pouvant se déplacer longitudinalement sur un guidage (4), et sur lequel est formée d'une pièce une collerette (5) dirigée pour l'essentiel radialement vers l'extérieur, qui forme une butée pour le roulement et possède une surface d'attaque (6) pour un élément de commande, caractérisée en ce que:

a) L'alésage du manchon (3, 30) présente à chacune de ses extrémités un anneau de glissement (8, 19, 27) coopérant avec le guidage (4), et entre les anneaux de glissement (8, 19, 27) une zone (9) à diamètre agrandi.

b) la collerette (5) est disposée dans la zone du manchon (3, 30) où son alésage présente le diamètre agrandi et

c) le boîtier (1, 18, 26) et les anneaux de glissement (8, 19, 27) se composent de matières polimères différentes, la matière des anneaux de glissement (8, 19, 27) se différenciant au moins de celle du boîtier (1, 18, 26) par le fait qu'elle est dépourvue de charges à effet abrasif.

2. Butée de débrayage suivant la revendication 1, caractérisée en ce que la matière des anneaux de glissement (27) contient un lubrifiant à sec.

3. Butée de débrayage suivant la revendication 1 ou 2, caractérisée en ce que la matière des anneaux de glissement (8) présente une dureté Shore plus faible que celle de la matière du boîtier (1).

4. Butée de débrayage suivant l'une des revendications 1 à 3, caractérisée en ce que le manchon (30) est muni de plusieurs fentes (31) courant pour l'essentiel axialement et réparties sur son pourtour, partant des extrémités libres du manchon (30) et correspondant dans leur étendue axiale pour l'essentiel à celle des anneaux de glissement (27).

5. Butée de débrayage suivant l'une des revendications 1 à 4, caractérisée en ce que les anneaux de glissement (27) sont fabriqués séparément du manchon (30) et sont fixés dans son alésage (29).

6. Butée de débrayage suivant l'une des revendications 1 à 4, caractérisée en ce que les anneaux de glissement (8, 19) sont formés d'une pièce sur le manchon (3).

7. Procédé de fabrication d'une butée de débrayage suivant la revendication 6, caractérisé en ce que la matière pour le boîtier (1) et la matière pour les anneaux de glissement (8) sont introduites dans un moule d'injection commun (10 et 11) par des canaux de coulée (14 et 15) pour l'essentiel simultanément et en ce que la liaison des deux matières s'effectue aux surfaces de séparation entre le boîtier (1) et les anneaux de glissement (8) à l'état plastique chaud.

8. Procédé de fabrication d'une butée de débrayage suivant la revendication 6, caractérisée en ce qu'on introduit dans un moule d'injection (10 et 11) avec espace creux de moule pouvant être agrandi, tout d'abord la matière pour le boîtier (1) par un premier canal (14), en ce que l'espace creux de moule est agrandi d'un espace correspondant aux anneax de glissement (8) et en ce que la matière pour les anneaux de glissement (8) est introduite par un second canal (15) dans le moule d'injection (10 et 11) où la liaison des deux matières aux surfaces de séparation entre le boîtier (1) et les anneaux de glissement (8) s'effetue à l'état plastique chaud.

9. Procédé de fabrication d'une butée de débrayage suivant la revendication 6, caractérisée en ce qu'on fabrique tout d'abord le boîtier (18) sans les anneax de glissement (19), en ce qu'on dispose celui-ci dans un moule (20 et 21) qui présente dans la zone des anneaux de glissement (19) des espaces libres correspondants et en ce qu'enfin on introduit la matière pour les anneaux de glissement (19) dans les espaces libres.

10. Procédé suivant la revendication 9, caractérisé en ce que les surfaces de séparation entre le boîtier (18) et les anneaux de glissement (19) sont munis avant que l'on ne dispose le boîtier (18) dans le moule (20 et 21) d'un agent d'adhérence.

FIG.1

FIG. 2

FIG.3

FIG.4

FIG.5